# EUROPEAN PATENT APPLICATION

(11) **EP 3 971 755 A1**
(43) Date of publication of application: **23.03.2022**
(21) Application number: 20196666.0
(22) Date of filing: 17.09.2020
(51) Int. Cl.: G06F 30/10, G06F 30/12, G06F 30/17, G06F 111/04

(54) **GEOMETRY-DRIVEN PARAMETERS IN COMPUTER-AIDED DESIGN**

(71) Applicant: Bricsys NV, 9050 Gent (Ledeberg) (BE)
(72) Inventor: Kazakov, Alexey, 630090 Novosibirsk (RU); Ivko, Mikhail, 630090 Novosibirsk (RU); Ushakov, Dmitry, 630090 Novosibirsk (RU)
(74) Representative: IP HILLS NV

(57) **Abstract**

A CAD model comprises one or more entities. A parameter and a dimensional constraint based on the parameter are received. Via direct user manipulation of an element in a GUI, wherein an element is an entity or part of an entity of the CAD model, a sequence of multiple desired movements is obtained. Upon obtaining a desired movement, a solution for the CAD model compliant with the dimensional constraint and the desired movement is computed via a constraint solver. If a solution can be computed, a rendering of the CAD model in the GUI is updated correspondingly. Via user input, the parameter is unlocked for direct user manipulation prior to the direct user manipulation. Computation of a solution via the constraint solver includes computing a new numerical value for the unlocked parameter.

## Description

### FIELD OF THE INVENTION

The present computer-implemented invention relates to modifying a computer-aided design (CAD) model via direct user manipulation in a graphical user interface (GUI).

### BACKGROUND

A user can add a dimensional constraint to a CAD model. A dimensional constraint limits a dimension associated with one or more entities of the CAD model. A dimensional constraint comprises an expression. A user can define a parameter. A parameter definition comprises a parameter (parameter name) and an expression. An expression can be a numerical value; or a function of one or more numerical values, dimensions and/or user-defined parameters. A numerical value can be associated with the expression. In case of an expression comprising a function, numerical values for the function variables (dimensions; parameters) define a numerical value for the expression via the specified function. User-defined parameters, especially when present in the expressions of many dimensional constraints of the CAD model, allow for simple and consistent modification of the entire CAD model.

US 8 913 059 B2 discloses a method for accepting a request to move a first geometric entity in a drawing by direct user manipulation. The first geometric entity is constrained to other geometric entities in the drawing. Affected geometric entities and the geometric constraints are classified into groups which are solved using a variational geometric constraint solver. If the geometric constraints cannot be satisfied, the movement of the first geometric entity is restricted. Otherwise, the affected geometric entities are updated.

Beyond the Basics: Working with Constraints in AutoCAD 2017 WEBINAR | AutoCAD, https://www.youtube.com/watch?v=WtffTidlu7Y (2 June 2016), hereafter referred to as 'webinar', shows an example of a movement request decline from 18:18 to 19:25. Upon receiving the request for movement, it is determined whether or not the constraints are solvable for such movement request. US 8 913 059 B2 discloses in column 8 lines 22 - 48 that a geometric constraint analyzer determines if a movement is appropriate in light of any geometric constraints that are in force for the geometric entity that the user attempts to move.

US 8 913 059 B2 does not provide for detection of constraint violation during movement, or the signaling thereof. US 8 913 059 B2 does not provide for outputting a finite solvable movement interval of non-zero size.

A dimensional constraint disclosed in US 8 913 059 B2 is an expression constraint, for example (Table 1) a distance constraint d₂ defined as twice the distance constraint d₁ plus one: d₂ = 2 ^{∗} d₁ + 1. The webinar discloses an example of an expression constraint from 31:45 to 32:42. The webinar discloses an example of a user-defined parameter from 32:42 to 34:09.

In the field of CAD, geometric constraints are distinguished from dimensional constraints, as is explained in, for example, Byrnes and Fane, AutoCAD 2013 for Dummies, John Wiley & Sons, Inc. (April 2012), ISBN 9781118392171, Chapter 19. Geometric constraints define qualitative object relationships, such as coincident, collinear, concentric, parallel, and tangent objects. Dimensional constraints are based on quantitative object relationships, such as distances and angles.

Traditionally, use of parameters ("parametric modeling paradigm") limits the ability for direct user manipulation ("direct modeling paradigm"), and vice versa. Direct user manipulation allows to move an element, wherein an element is an entity or part of an entity of a CAD model, via manipulation of the element in a GUI. For example: via a computer mouse and a GUI, which displays a rendering of the CAD model and a cursor, a user can hover the cursor over an element of the CAD model displayed in the GUI, activate or grab the element via the mouse buttons, move the element via computer mouse movement, and the like. Such direct user manipulations can be in conflict with dimensional constraints and user-defined parameters.

US 8 566 066 B2 discloses a computer-implemented invention for enforcing parametric constraints in a direct modeling interface in CAD. A parametric geometry engine of a CAD application may compare an attempted edit to a feature in a direct modeling user interface of the CAD application to an existing constraint created in a parametric modeling user interface, and, in one embodiment, prevent the user from completing the edit. In other embodiments, the parametric geometry engine may present a dialog box to the user and allow them to reject the edit, override or delete the constraint, modify the constraint, or take other actions as appropriate.

None of US 8 913 059 B2 and the webinar provide a solution for unifying the parametric and direct modeling paradigms. In US 8 566 066 B2, there is no solution in case an identified "preventing" constraint is in fact desired by the user, and the direct modeling edit is also desired.

Consider, for example, a CAD model comprising a sphere and a cuboid. The user can provide the following user-defined parameters: ρs, ρc, l, w and d, with certain non-negative initial numerical values. The user can set a cuboid length constraint with expression l, a cuboid width constraint with expression w, and a cuboid depth constraint with expression d. To the user, pc has the meaning of cuboid density and ps of sphere density. The user can then define a parameter m with expression ρc ^{∗} l ^{∗} w ^{∗} d, representing cuboid mass. The parameter m acquires an initial numerical value via its expression and the numerical values for ρc, l, w and d. Suppose the sphere is a counterweight for the cuboid. The user may then define the parameter r via the expression power((3 ^{∗} m) / (4 ^{∗} π ^{∗} ρs), 1 / 3), and set a sphere diameter constraint with expression 2 ^{∗} r.

According to the teachings of US 8 913 059 B2, when a user attempts to elongate the cuboid, the constraint for the cuboid length to the parameter l prevents the user from elongating the cuboid. The user is then presented with the options to either not modify the cuboid, or to drop the cuboid length constraint with expression l. The first one is undesired, as the user wishes to modify the CAD model. The second one is undesired, as the set of parameters and the CAD model are no longer consistent.

The present invention aims to resolve at least some of the problems and disadvantages mentioned above.

### SUMMARY OF THE INVENTION

In a first aspect, the present invention provides a computer-implemented method (CIM) for modifying a CAD model, according to claim 1.

In a second aspect, the present invention provides a computer system for modifying a CAD model. The computer system is configured for performing the CIM according to the first aspect of the present invention.

In a third aspect, the present invention provides a computer program product (CPP) for modifying a CAD model. The CPP comprises instructions which, when the CPP is executed by a computer, cause the computer to carry out the CIM according to the first aspect of the present invention.

Reference is made to the exemplary CAD model comprising a sphere and a cuboid disclosed above. The present invention allows to modify the CAD model in a parametrically consistent way via direct user manipulation. The user can unlock the parameter I for direct user manipulation prior to the direct user manipulation. When attempting to move a face of the cuboid via direct user manipulation, wherein the face movement corresponds to an elongation of the cuboid, the constraint solver can compute a solution under the imposed constraints, and thereby computes a new numerical value for the parameter I. In a preferred embodiment, upon receiving a confirmation, the parameter definition for I is updated with the computed new numerical value.

The present invention additionally provides for displaying a sequence of entire model renderings corresponding to a sequence of desired element movements, wherein each rendering is conform the constraints.

Reference is made to the exemplary CAD model comprising a sphere and a cuboid disclosed above. The present invention provides for an iterative updating of the rendering of the CAD model, wherein not only the elongation of the cuboid, but also the corresponding diameter increase of the sphere, is displayed.

When for a certain desired element movement, no solution can be computed, the updating of the rendering conform the desired element movement is not performed anymore. The updating of the rendering conform the desired element movement in case a solution can be obtained, in conjunction with absence of the updating of the rendering conform the desired element movement in case no solution can be obtained, provides to the user feedback on an entire continuum of element movements for which a solution can be computed, and a boundary for said continuum. Note that while an updating of the rendering conform the desired element movement cannot be performed anymore in absence of a solution, an updating of the rendering (not conform the desired element movement) may still be performed, e.g. with a visually altered representation of the element.

Reference is made to the exemplary CAD model comprising a sphere and a cuboid disclosed above. Suppose the sphere is located near a wall, and a distance constraint has been added, requiring the distance of the sphere to the wall to be non-negative.

The user can then move the face of the cuboid via direct user manipulation, to elongate the cuboid, up to the point when the sphere is tangent to the wall. This allows the user to not only view a continuum of possible solutions of the model, but to also immediately view a boundary for the continuum and a cause for the boundary.

### DESCRIPTION OF FIGURES

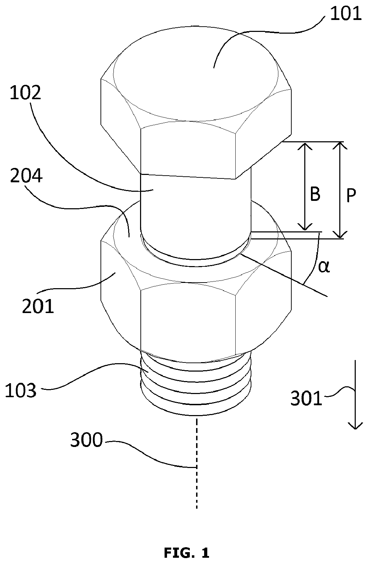

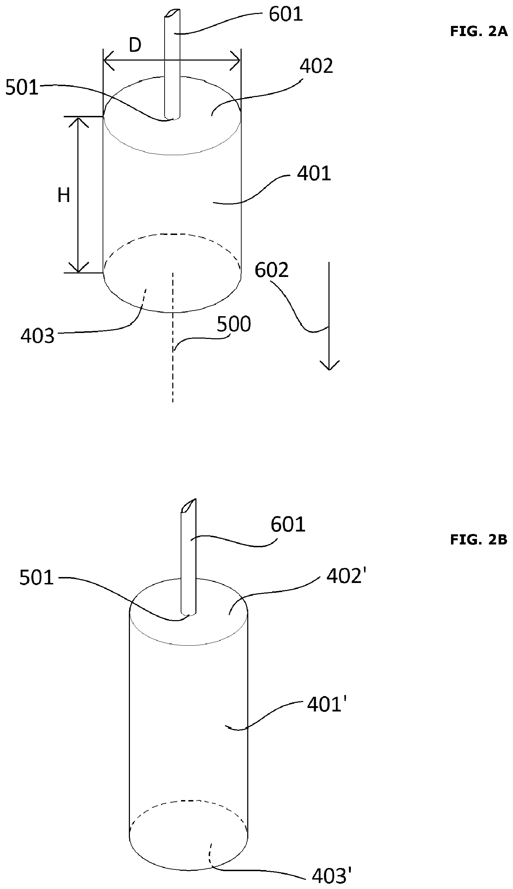

**Figures 1****,** **2A** and **2B** show exemplary CAD models for illustrating the present invention, and are described in the examples below.

### DETAILED DESCRIPTION OF THE INVENTION

The present invention concerns a CIM, a computer system, and a CPP for modifying a CAD model. The invention has been summarized in the corresponding section above. In what follows, the invention is described in detail, preferred embodiments are discussed, and the invention is illustrated by means of non-limitative examples.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

### Term definitions

"A", "an", and "the" as used herein refer to both singular and plural referents unless the context clearly dictates otherwise. By way of example, "a compartment" refers to one or more than one compartment.

"Comprise", "comprising", "comprises" and "comprised of" as used herein are synonymous with "include", "including", "includes" or "contain", "containing", "contains" and are inclusive or open-ended terms that specify the presence of what follows (e.g. component) and do not exclude or preclude the presence of additional, non-recited components, features, elements, members, and steps.

"Based on" as used herein is synonymous with "based at least in part on" and is an inclusive or open-ended term that specifies the presence of what follows (e.g. component) and does not exclude or preclude the presence of additional, non-recited components, features, elements, members, and steps.

A "computer-aided design model" (CAD model), as used herein, comprises computer-processable data, preferably digital data, about one or more entities. Preferably, the computer-processable data represents a manufacturable product. The data represents, or allows to derive, one or more properties of an entity, such as geometric properties, material properties and/or semantic properties. In case the CAD model comprises computer-processable data about multiple entities, the data also represents, or allows to derive, relative geometric properties between entities. More particularly, the computer-processable data defines the entities in terms of low-level features, such as, for example, vertices, edges, and faces.

The present invention may pertain to various types of CAD models, such as, for example, a building information model (BIM), a computer-aided architectural design (CAAD) model, a computer-aided manufacturing (CAM) model, a computer-aided engineering (CAE) model, or a mechanical engineering CAD model.

A CAD model may be viewed and edited via a corresponding CPP, so-called CAD software. CAD software preferably provides a graphical user interface (GUI) for viewing and editing the CAD model. In the GUI, a rendering of the CAD model is constructed based on geometric properties of the entities and/or the low-level features. One of ordinary skill in the art will appreciate that a CAD model hence comprises a computer-processable image in vector format, defined in terms of low-level features. An exemplary file format for storing a CAD model is DWG. A non-limiting list of examples of CAD software comprises 123D, ACIS, Advance Concrete, Advance Design, Advance Steel, AllyCAD, ArchiCAD, AutoCAD, BricsCAD, BRL-CAD, C3D, Caddie, Cadwork, CATIA, Chief Architect, Cobalt, Creo, DataCAD, DesignSpark Mechanical, Digital Project, Drawing Express, FINE MEP, form•Z, FreeCAD, HiCAD, IDEA Architectural, Inventor, IRONCAD, ItelliCAD, KeyCreator, LibreCAD, MEDUSA, MicroStation, Modelur, NanoCAD, NX, OpenCASCADE, OpenSCAD, Parasolid, PTC Creo, PowerCADD, progeCAD, PunchCAD, QCad, Revit Architecture, Revit MEP, Revit Structure, Rhinoceros 3D, RoutCad, SALOME, ShapeManager, SketchUp, Solid Edge, SolidWorks, SolveSpace, SpaceClaim, SpaceClaim Engineer, Tekla Structures, TopSolid, TransMagic, TurboCAD, VariCAD, VectorWorks, and VisualARQ.

A non-limiting list of examples of entities comprises a solid, a surface, a line and a point. An entity may comprise parts. An example is a cuboid, which comprises the following parts: 6 faces, 12 edges and 8 vertices. An "element" as used herein refers to an entity or a part of an entity.

Geometric and dimensional constraints interrelate elements of a CAD model. A dimensional constraint constrains a dimension. A dimension is a quantitative relation between elements, such as a distance or an angle. A non-limiting list of dimensions comprises a linear and an angular dimension. A non-limiting list of linear dimensions comprises a distance, a horizontal distance, a vertical distance, an object aligned distance, a radius, and a diameter. An angular dimension pertains to an angle. A dimensional constraint comprises an expression. The expression can be a numerical value; or a function of one or more numerical values, other dimensions and/or user-defined parameters. A numerical value can be associated with the expression. In case of an expression comprising a function, numerical values for the other dimensions and/or parameters define a numerical value for the dimensional constraint via the specified function.

A parameter may be defined by a user. A parameter definition comprises a parameter (parameter name) and an expression. The expression can be a numerical value; or a function of one or more numerical values, dimensions and/or user-defined parameters. A numerical value can be associated with the expression. In case of an expression comprising a function, numerical values for the dimensions and/or other parameters define a numerical value for the parameter via the specified function. A parameter is convenient when it occurs in many dimensional constraints. A single parameter update then allows to consistently modify many dimensions. A parameter is also convenient as an intermediary result, which has a meaning to the user.

Expressions may include numerical values, dimensions, user-defined parameters, (sub)expression delimiters (brackets), arithmetic operators (+, -, ^{∗}, /, %, ^), units, scale prefixes, predefined functions, and combinations thereof. A non-limitative list of predefined functions includes cosine, sine, tangent, arccosine, arcsine, arctangent, hyperbolic cosine, hyperbolic sine, hyperbolic tangent, square root, exponential, logarithm, round and power.

A parameter definition for a first parameter may include an expression comprising a second parameter. As the second parameter explicitly appears in the expression for the first parameter, the first parameter is expressed as a "direct function" of the second parameter. A parameter definition for the second parameter may include an expression comprising a third parameter. The first parameter then depends on the third parameter, via the second parameter. In case the third parameter does not appear explicitly in the expression for the first parameter, the first parameter is expressed as an "indirect function" of the third parameter.

### Aspects of the present invention

In a first aspect, the present invention provides a CIM for modifying a CAD model. In a second aspect, the present invention provides a computer system for modifying a CAD model. The computer system is configured for performing the CIM according to the first aspect of the present invention. The computer system according to the second aspect comprises a processor. In a third aspect, the present invention pertains to a CPP for modifying a CAD model. The CPP comprises instructions which, when the CPP is executed by a computer, such as a computer system according to the second aspect, cause the computer to carry out the CIM according to the first aspect of the present invention. The present invention also provides a tangible non-transitory computer-readable storage medium comprising the CPP. The computer system according to the second aspect may comprise the storage medium, one or more user input devices and/or a visualization means.

The three aspects of the present invention are hence interrelated. Therefore, all features disclosed in this document, above or below, may relate to each of these aspects, even if they have been disclosed in conjunction with a particular aspect.

A CAD model comprising one or more entities is received. A user may, for example, open and/or create and/or edit a CAD model. Via user input, a first parameter definition is received. The first parameter definition comprises a first parameter. Via user input, a dimensional constraint is received. The dimensional constraint expresses a dimension associated with the entities as a direct or indirect function of at least the first parameter. A user may, for example, provide the first parameter, an expression for the first parameter definition, and an expression for the dimensional constraint via a keyboard.

A rendering of the model is displayed via a GUI. Via direct user manipulation of an element in the GUI, a sequence of multiple desired movements is obtained. The element is an entity or part of an entity of the CAD model. Preferably, the entity is a solid and the element is a face of the solid. Preferably, the desired movement is a displacement of the face of the solid with respect to another face of the solid. A non-limiting list of movements and displacements comprises a translation and a rotation.

For each desired movement, upon receiving the desired movement, a solution for the model compliant with the dimensional constraint and the desired movement is computed via a constraint solver, and, in case a solution can be computed, the rendering displayed via the GUI is updated to a rendering conform the computed solution. Preferably, the constraint solver is a variational geometric constraint solver.

Via user input, the first parameter is unlocked for direct user manipulation prior to the direct user manipulation. The computing via a constraint solver of a solution for the model compliant with the dimensional constraint and the desired movement includes computing a new numerical value for the unlocked first parameter.

Multiple advantages have been disclosed in the summarizing section above.

In a preferred embodiment, via user input a confirmation of the direct user manipulation is received. Upon receiving the confirmation, the first parameter definition is updated with the computed new numerical value for the first parameter. More particularly, the expression of the first parameter definition is overwritten with the computed new numerical value for the first parameter.

In a preferred embodiment, a cursor is displayed via the GUI. Via user input, the cursor may be hovered over the element. Via user input, the element may be activated. Activation of the element may involve button pressing and releasing (such as a keyboard key or computer mouse button press and release). After activation, desired movements may be obtained via user input. Two-dimensional movements in the rendering may be obtained via user input (such as via keyboard keys, e.g. arrow keys, or computer mouse movement), and based on a camera point of view and/or view frustum and/or an element property and/or an entity property converted into desired element movements. Confirmation via user input may involve button pressing and releasing. Alternatively to activation via button pressing and releasing, an element can be activated for desired movements as long as a button is pressed. In this alternative embodiment, confirmation via user input may involve releasing of the button pressed for activation. Examples include pushing, pulling and dragging, as commonly known in the art.

Multiple parameter definitions may be received via user input. Via user input, multiple parameters, such as at least two parameters, may be unlocked for direct user manipulation prior to the direct user manipulation. A new numerical value is computed for each unlocked parameter, i.e. each parameter which is unlocked for direct user manipulation.

In a preferred embodiment, each parameter comprises a state. A list of parameter states comprises LOCKED and UNLOCKED for direct user manipulation. Via user input, a parameter state can be changed to UNLOCKED, which corresponds to "unlocking a parameter" for direct user manipulation via user input. Via user input, a parameter state can be changed to LOCKED, which corresponds to "locking a parameter" for direct user manipulation via user input. Preferably, by default, i.e. upon receiving the parameter definition, the parameter state is LOCKED.

In a preferred embodiment, a lock pictogram is displayed in conjunction with a parameter via the GUI. The lock pictogram can be toggled between a closed and an open representation via user input, e.g. by hovering with a cursor over the pictogram and clicking a mouse button. The closed and open pictogram representations correspond to the LOCKED and UNLOCKED states for the parameter, respectively. Preferably, a parameter overview may be displayed via the GUI. The parameter overview may comprise a list of parameters, listing each parameter in conjunction with an associated expression and preferably a current numerical value. Preferably, the pictogram for changing a parameter state is displayed on or near the parameter or the parameter expression in the parameter overview.

In a preferred embodiment, a second parameter definition is received via user input. The second parameter definition comprises a second parameter and an expression which expresses the second parameter as a direct or indirect function of at least the first parameter. If the second parameter is not unlocked, the constraint solver adheres to the expression for the second parameter. The expression for the second parameter is then not altered via the direct user manipulation. If the second parameter is unlocked, the constraint solver computes a new numerical value for the second parameter. The expression for the second parameter can then be overwritten with the new numerical value. Preferably, the function of the expression for the second parameter is a non-linear multi-variable function of at least two parameters. Preferably, via user input at least two parameters of the non-linear multi-variable function are unlocked for direct user manipulation prior to the direct user manipulation.

One of ordinary skill in the art will appreciate that a parameter being unlocked is hence synonymous with the expression for the parameter, i.e. the expression of the parameter definition comprising the parameter, being unlocked. The constraint solver computes for each unlocked parameter a new expression, wherein the new expression is a numerical value. The following pertains to the ability to additionally lock the numerical value of a locked parameter (locked expression). In case the expression expresses the parameter as a function of other parameters and/or dimensions, this allows to lock the numerical value in addition to the expression. Any variations to the parameters and/or dimensions on which the function depends then have to comply with the expression remaining equal to the numerical value associated with the expression prior to the direct user manipulation.

In a preferred embodiment, the numerical value associated with the expression of the second parameter definition is locked via user input for direct user manipulation prior to the direct user manipulation. The constraint solver adheres to the locked numerical value associated with the expression for the second parameter and adheres to the expression for the second parameter. The expression for the second parameter and the numerical value associated with the expression for the second parameter are then not altered via the direct user manipulation. This is advantageous as it allows a user to input custom constraints, such as engineering constraints, which are not equal to a dimension, but which may relate to one or more dimensions, e.g. a total mass for a multi-material CAD model or multi-material subsystem thereof.

In a preferred embodiment, the list of parameter states comprises LOCKED, UNLOCKED and FIXED for direct user manipulation. Via user input, the parameter state can be changed to FIXED, which corresponds to "locking a numerical value of a locked parameter" for direct user manipulation via user input. Preferably, a lock pictogram for locking the numerical value of a locked parameter is displayed in the parameter overview on or near the numerical value. Via user input, e.g. by hovering with a cursor over the pictogram and clicking a mouse button, the pictogram associated with the numerical value can be toggled between an open and a closed representation. The open and closed pictogram representations correspond to the LOCKED and FIXED states for the locked parameter, respectively. When the parameter is unlocked for direct user manipulation, the pictogram associated with the numerical value is either not displayed; or in an open representation and unchangeable via user input.

In a preferred embodiment, an unlocked parameter is handled in the constraint solver as a variable. In a preferred embodiment, the constraint solver computes an analytical gradient and an analytical Jacobian, which incorporate variations of each parameter which is unlocked for direct user manipulation. In a preferred embodiment, during direct user manipulation, a locked numerical value for a locked parameter is handled by replacing the locked parameter with the locked numerical value, and handling in the constraint solver an additional constraint, which is the corresponding parameter expression being equal to the locked numerical value. The locked parameter with locked numerical value is hence eliminated from a system of constraint equations.

In a preferred embodiment, in case no solution can be computed, visual feedback that no solution can be computed is displayed via the GUI. The visual feedback may be an absence of updating of the rendering conform the desired movement. The visual feedback may be a rendering comprising an altered visual representation of the element, such as a color change or pattern change, conform the last successfully computed solution. The visual feedback may be a rendering comprising an altered visual representation of elements associated with a dimensional constraint which cannot be satisfied anymore, such as a color change or pattern change of these elements, conform the last successfully computed solution.

In a preferred embodiment, the updating of the rendering to a rendering conform the computed solution comprises determining a difference portion of the rendering which is affected by the computed solution based on a view frustum and the computed solution. In this embodiment, the difference portion is replaced in the rendering with an updated portion conform the computed solution. This embodiment lowers computational cost, and hence enhances responsiveness of the GUI.

In an embodiment, an inequality dimensional constraint is received via user input. The inequality dimensional constraint is expressed as a boundary term plus or minus a geometry term. The geometry term is a positive function, a negative function, a positive semi-definite function, or a negative semi-definite function of a geometry parameter. Prior to direct user manipulation, the geometry parameter is unlocked for direct user manipulation. An example of a positive semi-definite function is the square of the geometry parameter.

For example: A boundary parameter definition comprising a boundary parameter and an expression comprising an initial numerical value are received via user input (e.g. "b = 5"). A geometry parameter definition comprising a geometry parameter and an expression is received (e.g. "t = ..."). The geometry parameter is unlocked for direct user manipulation via user input. A dimensional constraint is received via user input, comprising an expression consisting of the boundary parameter plus or minus the geometry parameter squared (e.g. "d ± t ^{∗} t"). Via direct user manipulation, the constrained dimension can be altered up to the numerical value of the boundary parameter. More particularly, in case of plus (e.g. "d + t ^{∗} t"), the constrained dimension will be larger or equal to the numerical value of the boundary parameter during direct user manipulation. More particularly, in case of minus (e.g. "d - t ^{∗} t"), the constrained dimension will be smaller or equal to the numerical value of the boundary parameter.

In a preferred embodiment, the CAD model comprising the parameter definition updated with the new numerical value is stored on a tangible non-transitory computer-readable storage medium.

The invention is further described by the following non-limiting examples which further illustrate the invention, and are not intended to, nor should they be interpreted to, limit the scope of the invention.

### EXAMPLES

### Example 1: Bolt and nut

**Figure 1** shows an exemplary CAD model comprising two entities: a bolt **101** and a nut **201.** A user may, for example, create the bolt and nut via direct modeling, and may impose a geometric constraint of bolt and nut coaxiality **300.** The bolt comprises a grip part **102** and a thread part **103.** The grip length, i.e. the dimension of the grip part **102** along the axis **300,** was constrained by the user to parameter **B,** which has a particular numerical value as expression. The thread part **103** has a pitch which was constrained by the user to a parameter 'pitch', which has a particular numerical value as expression.

The user desires to constrain nut rotation to match the thread. The user positions the nut so the upper face **204** of the nut is at the boundary between the grip and thread parts. The user defines a parameter **α,** representing an angle of rotation of the nut about the axis **300,** and provides the numerical value 0 as expression. The user adds a corresponding angular dimensional constraint with **α** as expression. Decreasing values for **α** correspond with movement of the nut in direction **301.**

The user defines a geometry parameter 't' and provides as expression the numerical value 0. The user overwrites the expression for α by '- t ^{∗} t'. The user furthermore constrains the distance **P** of the nut upper face **204** to the bolt head **101** via the expression '**B** - pitch ^{∗} **α** / 360°'. The user also unlocks the geometry parameter 't' for direct user manipulation.

When the user hovers with a cursor over the nut **201,** and activates the nut for movement, the user can move the nut down by cursor movement in direction **301.** The constraint solver can compute solutions, and the rendering is correspondingly updated, as the cursor is moved downward. When the user moves the cursor in the direction opposite of direction **301,** the constraint solver can compute a solution until the upper face **204** of the nut is at the boundary between the grip and thread parts. Moving the cursor further upward causes the nut to stay at the same location in the rendering, but to acquire an altered color in the rendering, to indicate to the user that further movement is no longer possible.

### Example 2: Counterweight

**Figures 2A** and **2B** show two instances of an exemplary CAD model comprising a cylindrical counterweight **401, 401'** on a steel cable **601.** An outer end of the steel cable **601** is constrained to be fixed at the center **501** of an upper face **402, 402'** of the counterweight.

The diameter of the counterweight is constrained to parameter **D,** which has a particular numerical value as expression. The height of the counterweight is constrained to parameter **H,** which has a particular numerical value as expression. The user defines a parameter 'density', with a particular numerical value as expression. The user furthermore defines a parameter 'weight', with 'density ^{∗} height ^{∗} 0.25 ^{∗} PI ^{∗} D ^{∗} D' as expression. The parameter 'weight' acquires a numerical value via its expression and the numerical values of the parameters in its expression.

The user keeps the parameter 'density' locked for direct user manipulation, as its value is a material constant and should not change. The user unlocks parameters **D** and **H** for direct user manipulation. The user furthermore locks the numerical value of the parameter 'weight' for direct user manipulation.

The user hovers with a cursor over the lower face **403** of the cylindrical counterweight (e.g. after changing camera point of view for the rendering), activates the face for push-pulling via a computer mouse button click, and pulls the lower face in direction **602** via computer mouse movement. The pulling corresponds with an increase in the height of the cylindrical counterweight, for each particular desired movement a specific numerical value for the height. The constraint solver is able to compute new numerical values for the parameters **D** and **H** for the desired movements of the lower face. As the user pulls the lower face **403, 403'** downward, renderings of a progressively longer and narrower counterweight are displayed via the GUI. The user then confirms the currently rendered geometry for the counterweight via a computer mouse button click. The expressions for the parameters **D** and **H** are overwritten with the corresponding new numerical values computed by the constraint solver.

## Claims

1. Computer-implemented method for modifying a computer-aided design model, comprising the steps of:
- receiving a computer-aided design model comprising one or more entities;
- receiving via user input a first parameter definition, wherein the first parameter definition comprises a first parameter;
- receiving via user input a dimensional constraint expressing a dimension associated with the entities as a direct or indirect function of at least the first parameter;
- displaying a rendering of the model via a graphical user interface;
- obtaining via direct user manipulation of an element in the graphical user interface, wherein the element is an entity or part of an entity of the model, a sequence of multiple desired movements, and performing for each desired movement upon obtaining the desired movement:
• computing via a constraint solver a solution for the model compliant with the dimensional constraint and the desired movement; and
• if a solution can be computed, updating the rendering displayed via the graphical user interface to a rendering conform the computed solution,
**characterized in that,** the first parameter is unlocked via user input for direct user manipulation prior to the direct user manipulation, wherein the step of computing via a constraint solver a solution for the model includes computing a new numerical value for the unlocked first parameter.

2. Computer-implemented method according to any one of the preceding claims, wherein via user input a confirmation of the direct user manipulation is received, whereupon the first parameter definition is updated with the computed new numerical value for the first parameter.

3. Computer-implemented method according to any one of the preceding claims, wherein a second parameter definition is received via user input, wherein the second parameter definition comprises a second parameter and an expression which expresses the second parameter as a direct or indirect function of at least the first parameter.

4. Computer-implemented method according to preceding claim 3, wherein the constraint solver adheres to the expression for the second parameter.

5. Computer-implemented method according to preceding claim 4, wherein the numerical value associated with the expression of the second parameter definition is locked via user input for direct user manipulation prior to the direct user manipulation, wherein the constraint solver adheres to the locked numerical value associated with the expression of the second parameter definition.

6. Computer-implemented method according to any one of the preceding claims, wherein at least two parameters are unlocked via user input for direct user manipulation prior to the direct user manipulation, wherein the step of computing via a constraint solver a solution for the model includes computing a new numerical value for each parameter which is unlocked for direct user manipulation.

7. Computer-implemented method according to both of preceding claims 3 and 6, wherein the function of the expression for the second parameter is a non-linear multi-variable function of at least two parameters, wherein at least two parameters of the non-linear multi-variable function are unlocked via user input for direct user manipulation prior to the direct user manipulation.

8. Computer-implemented method according to any one of the preceding claims, wherein the entity is a solid and the element is a face of the solid.

9. Computer-implemented method according to preceding claim 8, wherein the desired movement is a displacement of the face of the solid with respect to another face of the solid.

10. Computer-implemented method according to any one of the preceding claims, wherein the constraint solver is a variational geometric constraint solver.

11. Computer-implemented method according to any one of the preceding claims, wherein the constraint solver computes an analytical gradient and analytical Jacobian incorporating variations of each parameter which is unlocked for direct user manipulation.

12. Computer-implemented method according to any one of the preceding claims, wherein, if no solution can be computed, visual feedback indicating that no solution can be computed is displayed via the graphical user interface.

13. Computer-implemented method according to any one of the preceding claims, wherein the updating of the rendering to a rendering conform the computed solution comprises determining a difference portion of the rendering which is affected by the computed solution based on a view frustum and the computed solution, and replacing the difference portion in the rendering with an updated portion conform the computed solution.

14. Computer system for modifying a computer-aided design model, wherein the computer system is configured for performing the computer-implemented method according to any one of the preceding claims 1 to 13.

15. Computer program product for modifying a computer-aided design model, wherein the computer program product comprises instructions which, when the computer program product is executed by a computer, cause the computer to carry out the computer-implemented method according to any one of the preceding claims 1 to 13.
